# EUROPEAN PATENT APPLICATION

(11) **EP 4 610 438 A1**
(43) Date of publication of application: **03.09.2025**
(21) Application number: 23882299.3
(22) Date of filing: 22.09.2023
(51) Int. Cl.: E02F 9/20, E02F 9/22, F15B 11/00

(54) **WORK MACHINE AND ACTUATOR CALIBRATION SYSTEM**

(30) Priority: 27.10.2022 JP 2022172555
(71) Applicant: Hitachi Construction Machinery Co., Ltd., Tokyo 110-0015 (JP)
(72) Inventor: TANAKA, Hiroaki, Tsuchiura-shi, Ibaraki 300-0013 (JP); SUZUKI, Yusuke, Tsuchiura-shi, Ibaraki 300-0013 (JP); IGARASHI, Teruki, Tsuchiura-shi, Ibaraki 300-0013 (JP); MEGURIYA, Shuuichi, Tsuchiura-shi, Ibaraki 300-0013 (JP); NARAZAKI, Akihiro, Tsuchiura-shi, Ibaraki 300-0013 (JP); KANARI, Yasuhiko, Tsuchiura-shi, Ibaraki 300-0013 (JP); SAKAMOTO, Hiroshi, Tsuchiura-shi, Ibaraki 300-0013 (JP)
(74) Representative: MERH-IP Matias Erny Reichl Hoffmann Patentanwälte PartG mbB
(86) International application number: PCT/JP2023/034591
(87) International publication number: WO 2024/090087

(57) **Abstract**

An object of the present invention is to provide a work machine and an actuator calibration system which are capable of calibrating an actuator in a short time. To achieve this, a calibration device is configured to instruct a controller to transition to a calibration mode when instructed to perform a calibration of an actuator, in the calibration mode, cause a command value of a regulator that controls a pump flow rate to change in accordance with a predetermined pattern with a directional control valve being held in a neutral position, and, after instructing the controller to transition to the calibration mode, generate an update-use map in which a measured value of the pump flow rate is associated with the command value, and update a conversion map by using the update-use map.

## Description

### Technical Field

The present invention relates to a work machine, such as a hydraulic excavator, and an actuator calibration system.

### Background Art

A hydraulic system installed in a work machine such as a hydraulic excavator in related art includes a hydraulic pump that is driven by a prime mover such as an engine, an actuator that drives a machine body or a front implement (a work implement), and a directional control valve that controls the flow direction of a hydraulic fluid supplied from the hydraulic pump to the actuator. An operator of the work machine is able to issue instructions as to the action direction and action speed of the actuator by operating an operation device such as an operation lever.

In addition, in recent years, there is a work machine (a guidance excavator) provided with means to which a construction drawing that is a design for a terrain profile or the like on which a construction is to be performed can be inputted, means that estimates a work tool position including bucket claw tip position information and posture information and outputs a portion of the construction drawing which is close to the work tool position as a design surface on which an excavation can be actually performed, and a monitor that notifies an operator of the relation between the design surface and the work tool position. Further, there is a work machine (a semi-automatic control excavator) that performs control to cause a bucket to move along a design surface by controlling a boom action in such a manner that the design surface is not excessively excavated according to the relation between the design surface and a work tool position and an operation by an operator, thus assisting the operator in operation to achieve improved excavation accuracy.

Such a hydraulic excavator requires performing a calibration of an actuator to cause the actuator to act at a speed demanded by an operator or a controller. Patent Document 1, for example, can be cited as a prior art document that discloses a calibration method in a case where the actuator is a hydraulic cylinder.

Patent Document 1 describes a construction machine control system provided with a work machine including a boom, an arm, and a bucket and an operation device that accepts input of an operation command by an operator for driving the work machine, the construction machine control system including a hydraulic cylinder that drives the work machine, a directional control valve that includes a movable spool and which supplies a hydraulic operating fluid to the hydraulic cylinder through movement of the spool to cause the hydraulic cylinder to perform an action, a control valve that enables the spool to move on the basis of the operation command, a cylinder speed sensor that senses the cylinder speed of the hydraulic cylinder, a data acquisition section that acquires data indicating the cylinder speed and an operation command value indicating the value of an operation command signal for causing the hydraulic cylinder to perform an action, in a situation where the operation command signal has been outputted, the data including an initial state in which the cylinder speed is zero, a slow-speed region that is a speed region where the cylinder speed is greater than zero but smaller than a predetermined speed, and a normal-speed region that is a speed region where the cylinder speed is equal to or greater than the predetermined speed, a derivation section that derives an action start operation command value used when the hydraulic cylinder in the initial state starts performing an action, and slow-speed action characteristics and normal-speed action characteristics indicating the relations between the operation command value and the cylinder speed in the slow-speed region and the normal-speed region, on the basis of the data acquired by the data acquisition section, a storage section that stores the action start operation command value and the slow-speed action characteristics derived by the derivation section, and a work machine control section that controls the work machine on the basis of information stored in the storage section.

### Prior Art Document

### Patent Document

Patent Document 1: WO-2015-137524-A1

### Summary of the Invention

### Problem to be Solved by the Invention

In the hydraulic excavator described in Patent Document 1, when the fine-operation action characteristics and normal-speed action characteristics indicating the relations between the operation command value and the cylinder speed are acquired (which corresponds to a calibration of the hydraulic cylinder), it is necessary to output an operation command for causing the hydraulic cylinder to perform an action, and acquire the cylinder speed after the cylinder speed is stabilized, which requires the calibration to take a long time. In addition, when a to-be-driven member (an attachment such as a bucket) that is driven by the hydraulic cylinder is replaced with a member having a greater weight, inertia of the to-be-driven member is increased, causing the problem of a longer time taken until the cylinder speed is stabilized and a still longer time required for the calibration.

The present invention has been conceived in view of the above problem, and an object thereof is to provide a work machine and an actuator calibration system which are capable of calibrating an actuator in a short time.

### Means for Solving the Problem

To achieve the above object, the present invention is directed to a work machine including a hydraulic pump of a variable displacement type, a regulator that controls a pump flow rate, the pump flow rate being a delivery flow rate of the hydraulic pump, an actuator to be driven by a hydraulic fluid supplied from the hydraulic pump, a directional control valve that controls a flow direction of the hydraulic fluid supplied from the hydraulic pump to the actuator, the directional control valve being capable of being switched between a communication position and a neutral position, the communication position enabling supply of the hydraulic fluid from the hydraulic pump to the actuator, and the neutral position disabling the supply of the hydraulic fluid from the hydraulic pump to the actuator, an operation device for issuing an instruction as to an action of the actuator, and a controller that controls the regulator and the directional control valve according to an operation performed on the operation device. The controller stores a conversion map in which a target pump flow rate being a target value of the pump flow rate is associated with a command value of the regulator, and is configured to compute the target pump flow rate according to an operation amount of the operation device, convert the target pump flow rate to the command value in accordance with the conversion map, and output a command signal corresponding to the command value to the regulator. The work machine includes a calibration device that performs a calibration of the actuator, and a calibration instruction device for instructing the calibration device to perform the calibration of the actuator. The calibration device is configured to instruct the controller to transition to a calibration mode when instructed to perform the calibration of the actuator, in the calibration mode, cause the command value to change in accordance with a predetermined pattern with the directional control valve being held in the neutral position, and, after instructing the controller to transition to the calibration mode, generate an update-use conversion map in which a measured value of the pump flow rate is associated with the command value, and update the conversion map by using the update-use conversion map.

The present invention is also directed to an actuator calibration system including a calibration device that performs a calibration of an actuator for a work machine including a hydraulic pump of a variable displacement type, a regulator that controls a pump flow rate, the pump flow rate being a delivery flow rate of the hydraulic pump, the actuator to be driven by a hydraulic fluid supplied from the hydraulic pump, a directional control valve that controls a flow direction of the hydraulic fluid supplied from the hydraulic pump to the actuator, the directional control valve being capable of being switched between a communication position and a neutral position, the communication position enabling supply of the hydraulic fluid from the hydraulic pump to the actuator, and the neutral position disabling the supply of the hydraulic fluid from the hydraulic pump to the actuator, an operation device for issuing an instruction as to an action of the actuator, and a controller that controls the directional control valve according to an operation performed on the operation device, the controller storing a conversion map in which a target pump flow rate being a target value of the pump flow rate is associated with a command value of the regulator, and being configured to compute the target pump flow rate according to an operation amount of the operation device, convert the target pump flow rate to the command value in accordance with the conversion map, and output a command signal corresponding to the command value to the regulator. The calibration device is configured to instruct the controller to transition to a calibration mode, in the calibration mode, cause the command value to change in accordance with a predetermined pattern with the directional control valve being held in the neutral position, after instructing the controller to transition to the calibration mode, generate an update-use conversion map in which a measured value of the pump flow rate is associated with the command value, and update the conversion map by using the update-use conversion map.

According to the present invention having the above-described configurations, it is possible to perform a calibration of the actuator without causing the actuator to perform an action, which makes it possible to reduce a time required for the calibration. In addition, a change in the pump flow rate caused by an action of the actuator at the time of the calibration can be prevented, which makes it possible to suppress a reduction in calibration accuracy.

### Advantages of the Invention

The work machine or the actuator calibration system according to the present invention makes it possible to calibrate an actuator in a short time.

### Brief Description of the Drawings

FIG. 1 is a side view of a hydraulic excavator according to a first embodiment of the present invention.
FIG. 2 is a configuration diagram of a hydraulic control system in the first embodiment of the present invention.
FIG. 3 is a configuration diagram of a hydraulic system in the first embodiment of the present invention.
FIG. 4 is a control block diagram of a controller in the first embodiment of the present invention.
FIG. 5 is a control block diagram of a pump solenoid valve control section in the first embodiment of the present invention.
FIG. 6 is a control block diagram of a directional control solenoid valve control section in the first embodiment of the present invention.
FIG. 7 is a control block diagram of a calibration device in the first embodiment of the present invention.
FIG. 8 is a control block diagram illustrating a first modification of a calibration command output process section in the first embodiment of the present invention.
FIG. 9 is a control block diagram illustrating a second modification of the calibration command output process section in the first embodiment of the present invention.
FIG. 10 is a control block diagram illustrating a third modification of the calibration command output process section in the first embodiment of the present invention.
FIG. 11 is a control block diagram of a controller in a second embodiment of the present invention.
FIG. 12 is a control block diagram of a semi-automatic control section in the second embodiment of the present invention.

### Modes for Carrying Out the Invention

Hereinafter, a hydraulic excavator as an example of a work machine according to embodiments of the present invention will be described with reference to the accompanying drawings. Note that, in the drawings, like members are designated by like reference characters, and redundant description will be omitted as appropriate.

### [First Embodiment]

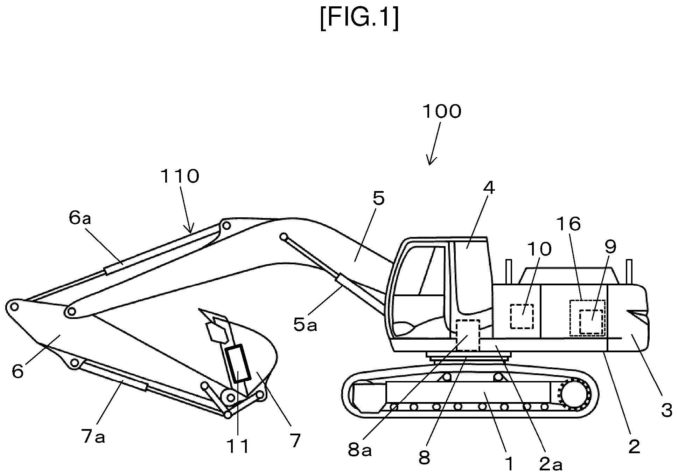

FIG. 1 is a side view of a hydraulic excavator according to a first embodiment of the present invention. The hydraulic excavator 100 includes a lower track structure 1, an upper swing structure 2 as a machine body installed on the lower track structure 1 so as to be swingable through a swing device 8, and a work implement 110 coupled to a front side of the upper swing structure 2 so as to be rotatable in an up-down direction.

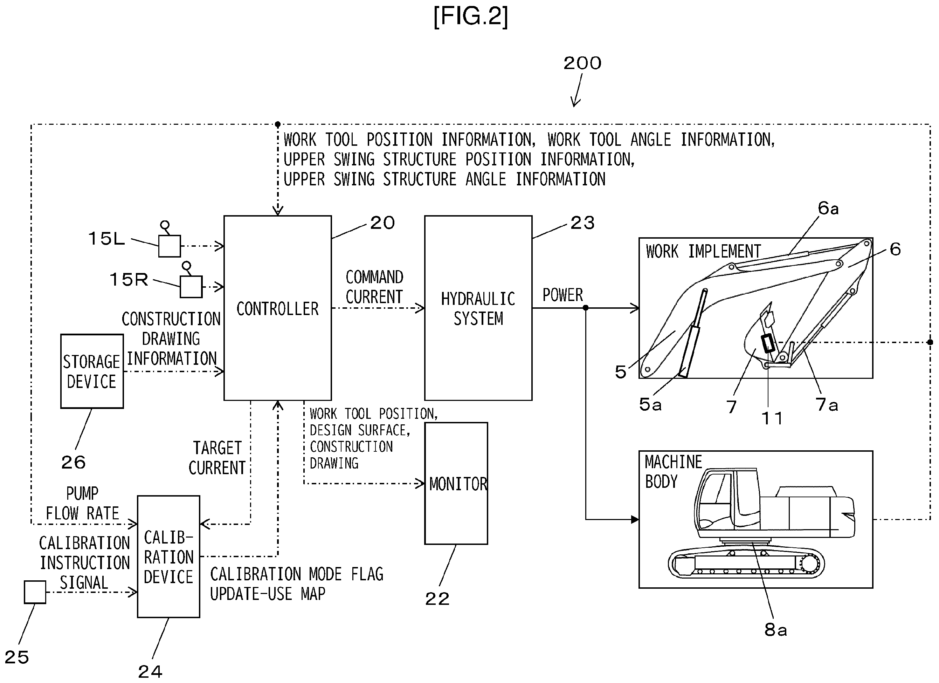

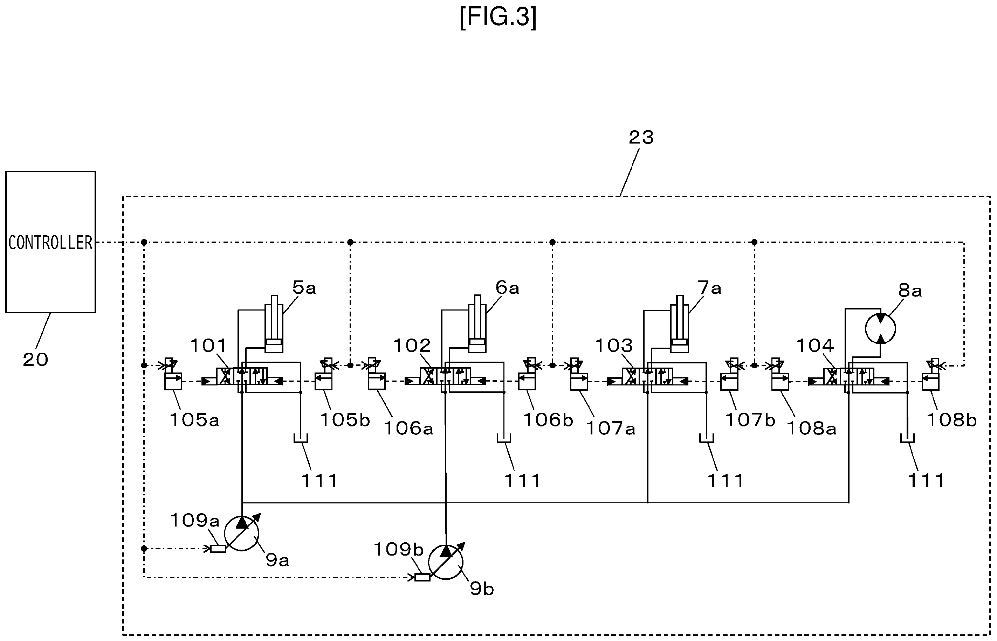

The upper swing structure 2 includes a swing frame 2a that forms a lower base structure. The work implement 110 is coupled to a front side of the swing frame 2a so as to be rotatable in the up-down direction. A counter weight 3 is fitted to a rear side of the swing frame 2a to maintain a weight balance in relation to the work implement 110. A cab 4 is provided at a front left portion of the swing frame 2a. A left operation lever 15L and a right operation lever 15R (depicted in FIG. 2 or FIG. 3), which are operation devices for operating the upper swing structure 2 and the work implement 110, and so on are arranged in the cab 4. An engine 16 as a prime mover, a pump device 9 including one or more hydraulic pumps 9a and 9b (depicted in FIG. 3) to be driven by the engine 16, a swing motor 8a for driving the swing device 8, a control valve unit 10 including a plurality of directional control valves, and so on are installed on the swing frame 2a. The control valve unit 10 controls flow of a hydraulic fluid which is supplied from the pump device 9 to each of the swing motor 8a and a plurality of actuators including a boom cylinder 5a, an arm cylinder 6a, and a bucket cylinder 7a, which will be described below. An engine speed sensor 16a for sensing the engine speed is fitted to the engine 16.

The work implement 110 includes a boom 5 having a proximal end portion coupled to a front right portion of the swing frame 2a so as to be rotatable in the up-down direction, an arm 6 that is coupled to a distal end portion of the boom 5 so as to be rotatable in the up-down, front-rear direction and which is raised and lowered by the boom 5, a bucket 7 as a work tool that is coupled to a distal end portion of the arm 6 so as to be rotatable in the up-down and front-rear directions and which is raised and lowered by the boom 5 or the arm 6, the boom cylinder 5a for driving the boom 5, the arm cylinder 6a for driving the arm 6, and the bucket cylinder 7a for driving the bucket 7.

Posture sensors 11a, 11b, 11c, and 11d are fitted to the upper swing structure 2, the boom 5, the arm 6, and a bucket link 7b for coupling a distal end portion of a rod of the bucket cylinder 7a to the arm 6 and the bucket 7, respectively. Each of the posture sensors 11a to 11d is formed by an angle sensor, an IMU, or the like.

FIG. 2 is a configuration diagram of a hydraulic control system installed in the hydraulic excavator 100. The hydraulic control system 200 includes the operation levers 15L and 15R, a controller 20, and a hydraulic system 23.

Each of the operation levers 15L and 15R is a device for an operator to issue an instruction as to an action of the hydraulic excavator 100 to the controller 20, and outputs an operation signal corresponding to a lever operation by the operator to the controller 20. The controller 20 outputs command currents to the hydraulic system 23 according to the operation signals from the operation levers 15L and 15R, construction drawing information, and posture information from the posture sensors 11a to 11d. In addition, the controller 20 computes the delivery flow rate (pump flow rate) of the hydraulic pump 9a or 9b, which will be described below, on the basis of a command current for a pump solenoid valve, which will be described below, and the engine speed, and outputs, to a calibration device 24, the delivery flow rate together with the command current for the pump solenoid valve.

The hydraulic system 23 supplies the hydraulic fluid to the boom cylinder 5a, the arm cylinder 6a, the bucket cylinder 7a, and the swing motor 8a according to command currents from the controller 20, thereby driving the boom 5, the arm 6, the bucket 7, and the swing device 8.

A monitor 22 is capable of displaying information (a work tool position, a design surface, and a construction drawing) outputted from the controller 20.

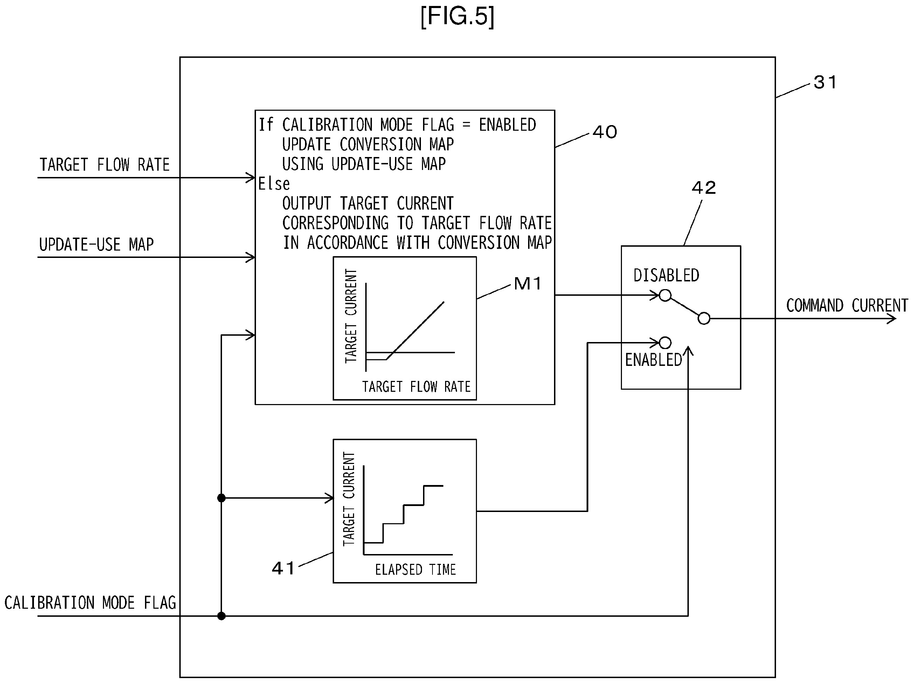

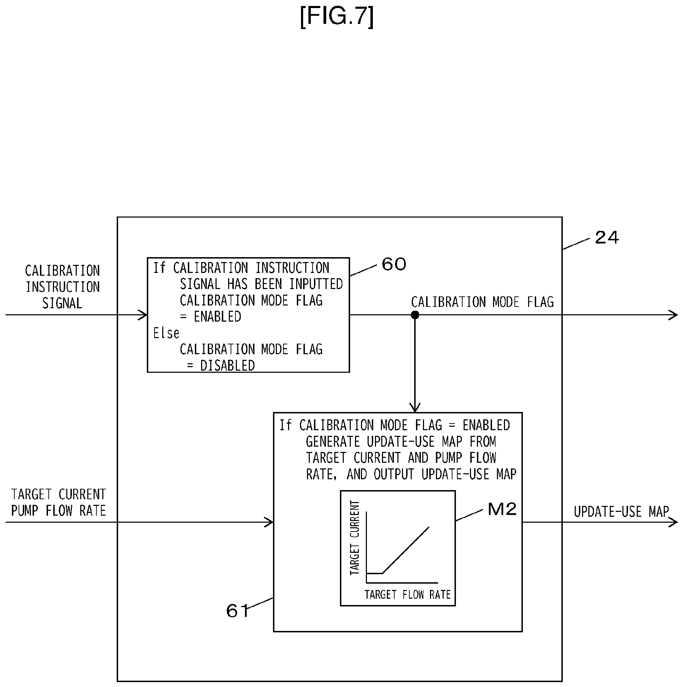

The calibration device 24 is a device that performs a calibration of each of the actuators 5a, 6a, 7a, and 8a, and forms a portion of an actuator calibration system. The calibration of the actuator 5a, 6a, 7a, or 8a means performing a calibration of the action speed of the actuator 5a, 6a, 7a, or 8a. Once a signal (a calibration instruction signal) for an instruction for a calibration of the actuator 5a, 6a, 7a, or 8a is inputted from a calibration instruction device 25 formed by a switch or the like, the calibration device 24 outputs information (a calibration mode flag) that indicates a transition to a calibration mode to the controller 20, and outputs an update-use map M2 (depicted in FIG. 7) for updating a conversion map M1 (depicted in FIG. 5) stored in the controller 20 to the controller 20. Note that a system including the posture sensors 11a to 11d, the monitor 22, and a storage device 26 that stores the construction drawing information in addition to the hydraulic control system 200 is referred to as a machine guidance system. The calibration device 24 and the calibration instruction device 25 are installed in the hydraulic excavator 100 in the present embodiment, but may alternatively be formed by devices independent of the hydraulic excavator 100, and be connected to the controller 20 when a calibration of any of the actuators 5a, 6a, 7a, and 8a is performed.

FIG. 3 is a configuration diagram of the hydraulic system 23. The hydraulic system 23 includes a tank 111 for storing a hydraulic operating fluid, the hydraulic pumps 9a and 9b that are of a variable displacement type and which pressurize and deliver the hydraulic operating fluid sucked from the tank 111, regulators 109a and 109b that control the displacement of the hydraulic pumps 9a and 9b according to a command current from the controller 20, the actuators 5a, 6a, 7a, and 8a, directional control valves 101 to 104 that control the flow direction of the hydraulic fluid supplied from the hydraulic pumps 9a and 9b to the actuators 5a, 6a, 7a, and 8a, and solenoid valves 105a, 105b, 106a, 106b, 107a, 107b, 108a, and 108b (hereinafter referred to as directional control solenoid valves) that generate pilot pressures of the directional control valves 101 to 104 according to a command current from the controller 20.

The hydraulic pumps 9a and 9b each vary the displacement (the delivery amount per revolution) according to the angle (tilting angle) of a swash plate or a tilting shaft. The regulators 109a and 109b each incorporate a piston for driving the swash plate or tilting shaft of the corresponding hydraulic pump 9a or 9b, and a solenoid valve (hereinafter referred to as a pump solenoid valve) for generating a driving pressure (a pilot pressure) of the piston. The pump solenoid valve generates the pilot pressure by reducing a primary pilot pressure inputted from a pilot pump (not depicted), according to a command current outputted from the controller 20. The delivery flow rate (pump flow rate) of the hydraulic pump 9a or 9b is obtained by multiplying the displacement of the hydraulic pump 9a or 9b by the revolution speed of the engine 16 (depicted in FIG. 1). The displacement of the hydraulic pump 9a or 9b can be derived from the pilot pressure of the corresponding regulator 109a or 109b or the command current of the pump solenoid valve.

The directional control valves 101 to 104 are capable of being switched between two communication positions and a neutral position, the communication positions enabling supply of the hydraulic fluid from the hydraulic pumps 9a and 9b to each of the actuators 5a, 6a, 7a, and 8a, the neutral position disabling the supply of the hydraulic fluid from the hydraulic pumps 9a and 9b to each of the actuators 5a, 6a, 7a, and 8a, and are switched according to pilot pressures outputted from the directional control solenoid valves 105a, 105b, ... , 108a, and 108b. The directional control solenoid valves 105a, 105b, ... , 108a, and 108b generate the pilot pressures of the directional control valves 101 to 104 by reducing a primary pilot pressure inputted from a pilot pump (not depicted) according to a command current outputted from the controller 20.

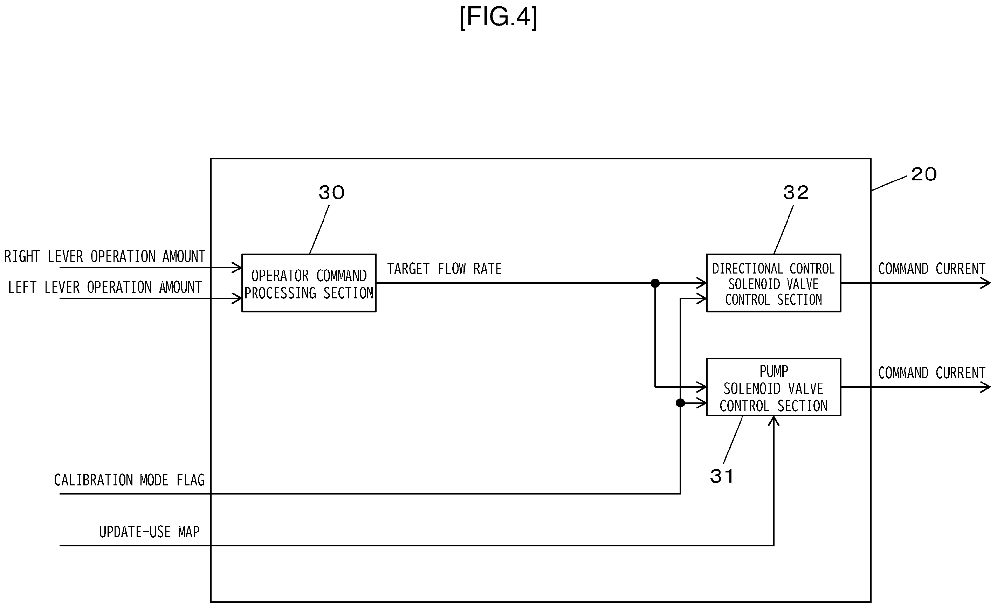

FIG. 4 is a functional block diagram of the controller 20. The controller 20 includes an operator command processing section 30, a pump solenoid valve control section 31, a directional control solenoid valve control section 32, and a pump flow rate computation section 33. The controller 20 includes a controller having computational processing capability, an input/output interface for signal input/output in relation to external devices, and so on, and implements functions of each section by executing a program stored in a storage device such as a ROM.

The operator command processing section 30 determines the target flow rate of the actuators 5a, 6a, 7a, and 8a on the basis of the operation amount of the operation levers 15L and 15R, and outputs the determined target flow rate to each of the pump solenoid valve control section 31 and the directional control solenoid valve control section 32.

The pump solenoid valve control section 31 outputs a command current corresponding to the target flow rate of each of the actuators 5a, 6a, 7a, and 8a to the pump solenoid valve when the calibration mode flag is disabled, and outputs a previously set calibration-use command current to the pump solenoid valve when the calibration mode flag is enabled. In addition, when the calibration mode flag is enabled and the update-use map M2 has been inputted, the pump solenoid valve control section 31 updates the conversion map M1 (depicted in FIG. 5) by using the update-use map M2.

The directional control solenoid valve control section 32 outputs a command current to each of the directional control solenoid valves 105a, 105b, ... , 108a, and 108b according to the target flow rate of each of the actuators 5a, 6a, 7a, and 8a when the calibration mode flag is disabled, and outputs a previously set calibration-use command current to each of the directional control solenoid valves 105a, 105b, ... , 108a, and 108b when the calibration mode flag is enabled.

The pump flow rate computation section 33 computes the displacement (the delivery amount per revolution) of the hydraulic pump 9a or 9b from the command current outputted from the pump solenoid valve control section 31, and multiplies the computed displacement by the engine speed to compute the delivery flow rate (pump flow rate) of the hydraulic pump 9a or 9b. Note that the engine speed is not limited to a measured value inputted from the engine speed sensor 16a, and may alternatively be a control value inputted from an engine controller, which is not depicted.

FIG. 5 is a functional block diagram of the pump solenoid valve control section 31. The pump solenoid valve control section 31 includes a pump solenoid valve command current computation section 40, a calibration-time pump solenoid valve command current computation section 41, and a command current switching section 42.

The pump solenoid valve command current computation section 40 stores the conversion map M1 in which the target flow rate (target pump flow rate) of each of the hydraulic pumps 9a and 9b is associated with the command current of the pump solenoid valve, outputs a command current corresponding to the target flow rate inputted from the operator command processing section 30 when the calibration mode flag is disabled, and updates the conversion map M1 stored therein by using the update-use map M2 (depicted in FIG. 7) inputted from the calibration device 24 when the calibration mode flag is enabled.

The calibration-time pump solenoid valve command current computation section 41 stores a command current pattern and, when the calibration mode flag is enabled, outputs a command current corresponding to an elapsed time since a time point at which the calibration mode flag has become enabled. The command current pattern mentioned here is used for calibration and is commonly set such that the command current increases in a stepwise manner with the elapsed time.

The command current switching section 42 outputs the command current inputted from the pump solenoid valve command current computation section 40 to the pump solenoid valve when the calibration mode flag is disabled, and outputs the command current inputted from the calibration-time pump solenoid valve command current computation section 41 to the pump solenoid valve when the calibration mode flag is enabled.

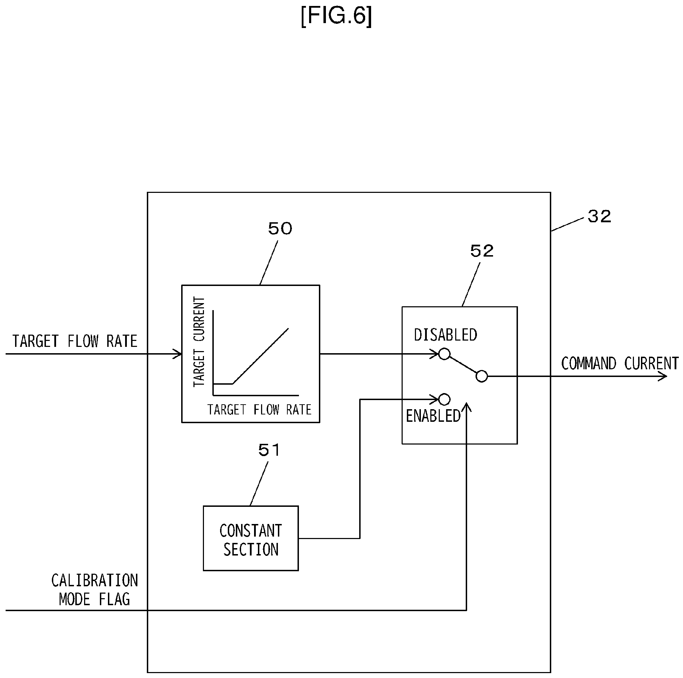

FIG. 6 is a control block diagram of the directional control solenoid valve control section 32. The directional control solenoid valve control section 32 includes a directional control solenoid valve command current computation section 50, a constant section 51, and a command current switching section 52.

The directional control solenoid valve command current computation section 50 stores a conversion map in which the target flow rates of the actuators 5a, 6a, 7a, and 8a are associated with the command currents of the directional control solenoid valves 105a, 105b, ... , 108a, and 108b, and outputs a command current corresponding to the target flow rate inputted from the operator command processing section 30.

The constant section 51 outputs a command current (a command current for holding each of the directional control valves 101 to 104 in the neutral position) for each of the directional control solenoid valves 105a, 105b, ... , 108a, and 108b when a calibration is to be performed thereon.

The command current switching section 52 outputs the command current inputted from the directional control solenoid valve command current computation section 50 when the calibration mode flag is disabled, and outputs the command current inputted from the constant section 51 when the calibration mode flag is enabled.

FIG. 7 is a control block diagram of the calibration device 24. The calibration device 24 includes a calibration mode flag output section 60 and an update-use map generation section 61. As with the controller 20, the calibration device 24 includes a controller having computational processing capability, an input/output interface for signal input/output in relation to external devices, and so on, and implements functions of each section by executing a program stored in a storage device such as a ROM.

The calibration mode flag output section 60 outputs a calibration mode flag set to be enabled, when a calibration instruction signal has been inputted from the calibration instruction device 25, and otherwise outputs a calibration mode flag set to be disabled.

The update-use map generation section 61 generates and outputs the update-use map M2 in which the command current of the pump solenoid valve inputted from the controller 20 is associated with the delivery flow rate (pump flow rate) of each of the hydraulic pumps 9a and 9b, when the calibration mode flag inputted from the calibration mode flag output section 60 is enabled.

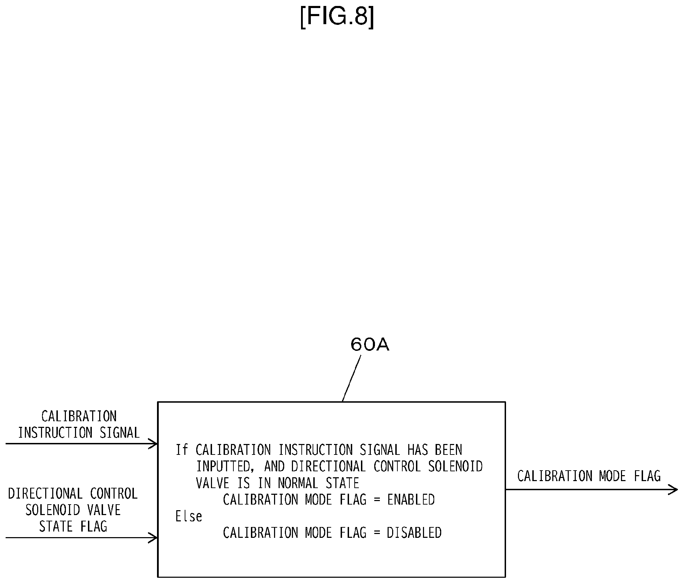

FIG. 8 is a control block diagram illustrating a first modification of the calibration mode flag output section 60. A calibration mode flag output section 60A outputs the calibration mode flag set to be enabled, when the calibration instruction signal has been inputted and each of the directional control solenoid valves 105a, 105b, ... , 108a, and 108b is in a normal state, and otherwise outputs the calibration mode flag set to be disabled. A directional control solenoid valve state flag in the figure indicates a result of a determination as to whether each of the directional control solenoid valves 105a, 105b, ... , 108a, and 108b is in the normal state. For example, when a short circuit (short) has occurred in an electrical circuit of the solenoid valve, flow of electric current to the solenoid valve is disabled. Therefore, it is possible to determine whether each of the directional control solenoid valves 105a, 105b, ... , 108a, and 108b is in the normal state through monitoring by the controller 20 of electric current passing through the directional control solenoid valves 105a, 105b, ... , 108a, and 108b. This configuration allows the controller 20 to transition to the calibration mode only when the directional control valves 101 to 104 are acting without a problem, which makes it possible to ensure that the directional control valves 101 to 104 are held in the neutral position at the time of a calibration.

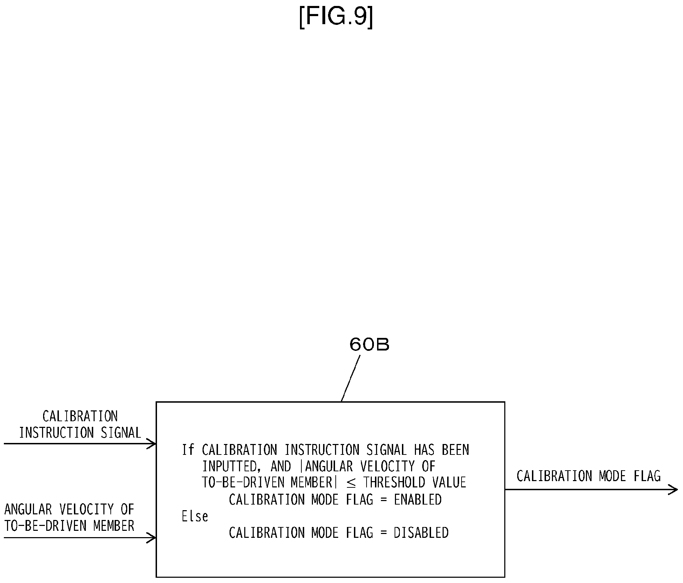

FIG. 9 is a control block diagram illustrating a second modification of the calibration mode flag output section 60. A calibration mode flag output section 60B outputs the calibration mode flag set to be enabled, when the calibration instruction signal has been inputted and the absolute value of the angular velocity of each of the to-be-driven members 2 and 5 to 7 is equal to or smaller than a threshold value, and otherwise outputs the calibration mode flag set to be disabled. This configuration is able to prevent the controller 20 from transitioning to the calibration mode before the actuators 5a, 6a, 7a, and 8a are stopped. This, in turn, prevents a change in the pump flow rate caused by an action of each of the actuators 5a, 6a, 7a, and 8a at the time of a calibration, leading to improved accuracy of the calibration of each of the actuators 5a, 6a, 7a, and 8a.

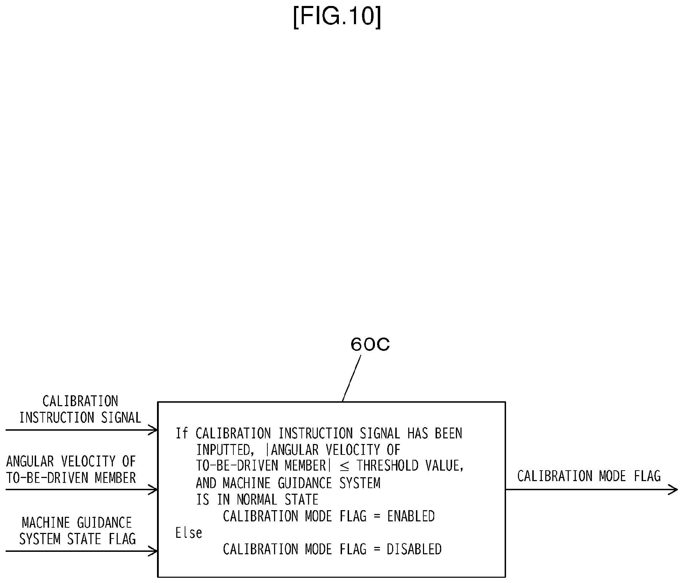

FIG. 10 is a control block diagram illustrating a third modification of the calibration mode flag output section 60. A calibration mode flag output section 60C outputs the calibration mode flag set to be enabled, when the calibration instruction signal has been inputted, the absolute value of the angular velocity of each of the to-be-driven members 2 and 5 to 7 is equal to or smaller than a threshold value, and the machine guidance system is in a normal state, and otherwise outputs the calibration mode flag set to be disabled. A machine guidance system state flag in the figure indicates a result of a determination as to whether the machine guidance system is in the normal state. The machine guidance system state flag has a value indicative of the normal state when all components (the hydraulic control system 200, the posture sensors 11a to 11d, the monitor 22, and the storage device 26) of the machine guidance system are in a normal state, and has a value indicative of an abnormality when an abnormality has been sensed in any of the components. For example, when a short circuit (short) has occurred in the posture sensors 11a to 11d, an output current or output voltage of the posture sensors 11a to 11d becomes zero. Therefore, it is possible to determine whether the posture sensors 11a to 11d are in the normal state through monitoring by the controller 20 of the output of the posture sensors 11a to 11d. A description concerning a method for determining whether each of the other components is in the normal state is omitted. This configuration is able to prevent the controller 20 from transitioning to the calibration mode when there is an abnormality in the machine guidance system, regardless of a measured value of the angular velocity of each of the to-be-driven members 2 and 5 to 7. This, in turn, makes it possible to securely prevent a change in the pump flow rate caused by an action of each of the actuators 5a, 6a, 7a, and 8a at the time of a calibration.

### (Summary)

In the present embodiment, the work machine 100 includes the hydraulic pumps 9a and 9b of the variable displacement type, the regulators 109a and 109b that control the pump flow rate, the pump flow rate being the delivery flow rate of each of the hydraulic pumps 9a and 9b, the actuators 5a, 6a, 7a, and 8a to be driven by the hydraulic fluid supplied from the hydraulic pumps 9a and 9b, the directional control valves 101 to 104 that control the flow direction of the hydraulic fluid supplied from the hydraulic pumps 9a and 9b to the actuators 5a, 6a, 7a, and 8a, the directional control valves 101 to 104 being capable of being switched between the communication position and the neutral position, the communication position enabling supply of the hydraulic fluid from the hydraulic pumps 9a and 9b to the actuators 5a, 6a, 7a, and 8a, and the neutral position disabling the supply of the hydraulic fluid from the hydraulic pumps 9a and 9b to the actuators 5a, 6a, 7a, and 8a, the operation devices 15L and 15R for issuing an instruction as to an action of each of the actuators 5a, 6a, 7a, and 8a, and the controller 20 that controls the regulators 109a and 109b and the directional control valves 101 to 104 according to operations performed on the operation devices 15L and 15R, the controller 20 storing the conversion map M1 in which the target pump flow rate being the target value of the pump flow rate is associated with the command value of each of the regulators 109a and 109b, and being configured to compute the target pump flow rate according to the operation amount of each of the operation devices 15L and 15R, convert the target pump flow rate to the command value in accordance with the conversion map M1, and output a command signal corresponding to the command value to each of the regulators 109a and 109b. The work machine 100 includes the calibration device 24 that performs a calibration of each of the actuators 5a, 6a, 7a, and 8a, and the calibration instruction device 25 for instructing the calibration device 24 to perform the calibration of each of the actuators 5a, 6a, 7a, and 8a. The calibration device 24 is configured to instruct the controller 20 to transition to the calibration mode when instructed to perform the calibration of each of the actuators 5a, 6a, 7a, and 8a, in the calibration mode, cause the command value to change in accordance with a predetermined pattern with the directional control valves 101 to 104 being held in the neutral position, and, after instructing the controller 20 to transition to the calibration mode, generate the update-use map M2 in which the measured value of the pump flow rate is associated with the command value, and update the conversion map M1 by using the update-use map M2.

Effects that are achieved by the present embodiment having the above configuration will be described below in comparison with related art. In related art, when a calibration of a hydraulic cylinder is performed, it is necessary to output an operation command for causing the hydraulic cylinder to perform an action, and acquire the speed of the cylinder after the speed of the cylinder is stabilized, which requires the calibration to take a longer time. In addition, when a to-be-driven member (an attachment such as a bucket) that is driven by the hydraulic cylinder is replaced with a member having a greater weight, inertia of the to-be-driven member is increased, causing the problem of a longer time taken until the speed of the cylinder is stabilized and a still longer time required for the calibration.

In contrast, in the present embodiment, it is possible to update the conversion map in which the target pump flow rate is associated with the command value of the regulator, without causing each of the actuators 5a, 6a, 7a, and 8a to perform an action. Here, the speed of the actuator can be derived by computation from the pump flow rate, the dimensions of the actuator 5a, 6a, 7a, or 8a, the weight of the to-be-driven object, and so on. That is, updating the conversion map M1 is essentially the same as performing the calibration of the actuator 5a, 6a, 7a, or 8a. Thus, since it is possible to perform the calibration of the actuator 5a, 6a, 7a, or 8a without causing the actuator 5a, 6a, 7a, or 8a to perform an action, the time required for the calibration can be reduced. In addition, since a change in the pump flow rate caused by an action of each of the actuators 5a, 6a, 7a, and 8a at the time of the calibration can be prevented, a reduction in calibration accuracy can be suppressed. Note that, although the controller 20 and the calibration device 24 have been described as independent devices in the description of the present embodiment, the functions of these devices may be implemented in a single controller.

In addition, in the present embodiment, the work machine 100 includes the machine body 2, the work implement 110 including the work tool 7 and fitted to the machine body 2, the plurality of actuators 5a, 6a, 7a, and 8a that drive the machine body 2 and the work implement 110, and the plurality of directional control valves 101 to 104 that control the flow direction of the hydraulic fluid supplied from the hydraulic pumps 9a and 9b to the plurality of actuators 5a, 6a, 7a, and 8a, and the controller 20 is configured to hold the plurality of directional control valves 101 to 104 in the neutral position in the calibration mode, regardless of the operations performed on the operation devices 15L and 15R. This makes it possible to prevent the work machine 100 from performing an action at the time of a calibration.

Further, in the present embodiment, the work machine 100 includes the posture sensors 11a to 11d that measure the posture of the machine body 2 or the work implement 110, and the calibration device 24 does not instruct the controller 20 to transition to the calibration mode when a change in the measured value of any of the posture sensors 11a to 11d over a unit time exceeds a predetermined threshold value, even when instructed to perform the calibration of each of the actuators 5a, 6a, 7a, and 8a. This prevents the controller 20 from transitioning to the calibration mode before the actuators 5a, 6a, and 7a are stopped, making it possible to prevent a change in the pump flow rate caused by an action of each of the actuators 5a, 6a, and 7a at the time of a calibration.

Furthermore, in the present embodiment, the calibration device 24 does not instruct the controller 20 to transition to the calibration mode when there is an abnormality in the posture sensors 11a to 11d, regardless of the measured values of the posture sensors 11a to 11d. This makes it possible to securely prevent the controller 20 from transitioning to the calibration mode when the actuators 5a, 6a, 7a, and 8a are not stopped.

Furthermore, in the present embodiment, the calibration device 24 does not instruct the controller 20 to transition to the calibration mode when there is a problem with an action of the directional control valves 101 to 104, even when instructed to perform the calibration of each of the actuators 5a, 6a, 7a, and 8a. This makes it possible to ensure that the directional control valves 101 to 104 will be held in the neutral position at the time of a calibration.

### [Second Embodiment]

A work machine according to a second embodiment of the present invention will be described below with focus on differences from the first embodiment.

In a hydraulic excavator 100 having a semi-automatic control function, a boom 5 automatically acts to correct the position of a bucket 7. Accordingly, in the case of the configuration (as illustrated in FIG. 9 or FIG. 10) in which the controller 20 is caused to transition to the calibration mode after waiting for the actuators 5a, 6a, 7a, and 8a to stop, an action of the boom cylinder 5a which is not intended by the operator may cause a delay in the transition to the calibration mode, causing the problem of an increase in the time from when the operator issues an instruction to perform a calibration until the calibration is completed. The present embodiment aims to solve this problem.

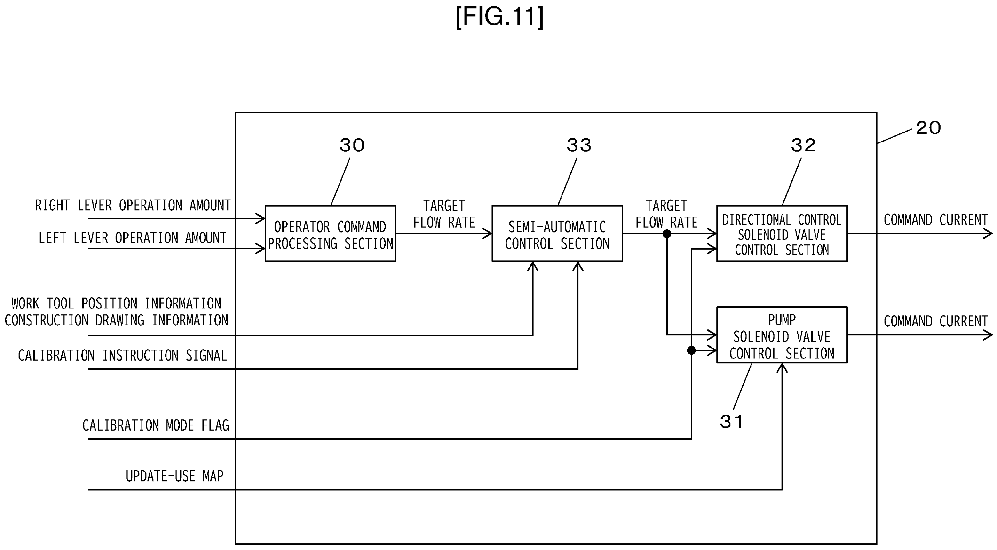

FIG. 11 is a control block diagram of a controller 20 according to the present embodiment. The controller 20 additionally includes a semi-automatic control section 34 when compared to the configuration of the first embodiment (illustrated in FIG. 3). The semi-automatic control section 34 controls the position of the bucket so as to prevent excessive excavation of a design surface, according to a target flow rate inputted from an operator command processing section 30, posture information inputted from posture sensors 11a to 11d, and construction drawing information inputted from a storage device 26.

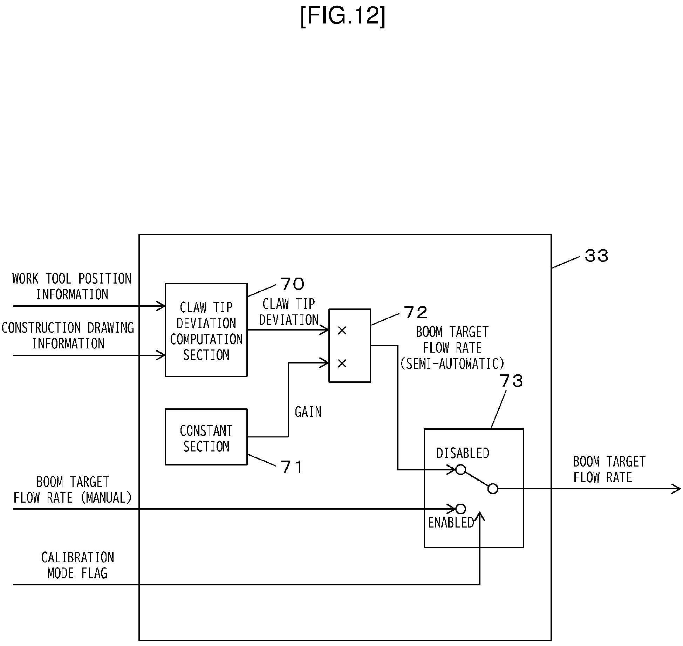

FIG. 12 is a control block diagram of the semi-automatic control section 34. The semi-automatic control section 34 includes a claw tip deviation computation section 70, a constant section 71, a multiplication section 72, and a boom target flow rate switching section 73.

The claw tip deviation computation section 70 computes a difference (a claw tip deviation) between the height of a bucket claw tip position and the height of the design surface on the basis of the posture information and the construction drawing information. The multiplication section 72 multiplies the claw tip deviation by a gain inputted from the constant section 71, thereby computing a boom target flow rate for correcting the position of the bucket so as to prevent excessive excavation of the design surface.

The boom target flow rate switching section 73 outputs a boom target flow rate inputted from the operator command processing section 30, when a calibration mode switch signal is enabled, and outputs the boom target flow rate inputted from the multiplication section 72 when the calibration mode switch signal is disabled. Note that, although not illustrated in the figures, the semi-automatic control section 34 outputs target flow rates inputted from the operator command processing section 30 as they are as the target flow rates of the actuators 6a, 7a, and 8a other than the boom cylinder 5a. That is, when the boom target flow rate switching section 73 outputs the boom target flow rate inputted from the operator command processing section 30 (when the calibration mode switch signal is enabled), the semi-automatic control function is disabled, and the actuators 6a, 7a, and 8a are controlled according to manual operation by the operator. Meanwhile, when the boom target flow rate switching section 73 outputs the boom target flow rate inputted from the multiplication section 72 (when the calibration mode switch signal is disabled), the semi-automatic control function is enabled, and the work tool 6 is controlled by the actuators 6a, 7a, and 8a in such a manner as to move along the design surface.

### (Summary)

In the present embodiment, the work machine 100 includes the storage device 26 that stores the construction drawing information, and the controller 20 has the semi-automatic control function of controlling an action of the work tool 6 in such a manner that the work tool 6 moves along a design surface selected from the construction drawing information as a target of a construction work by the work tool 6, and is configured to disable the semi-automatic control function at a timing when the calibration device 24 has been instructed to perform the calibration of each of the actuators 5a, 6a, 7a, and 8a.

According to the present embodiment having the above configuration, the semi-automatic control function is disabled immediately after the operator issues an instruction to perform a calibration of each of the actuators 5a, 6a, 7a, and 8a, and therefore, it is possible to stop the actuators 5a, 6a, 7a, and 8a quickly when the calibration of each of the actuators 5a, 6a, 7a, and 8a is started. Thus, in the configuration (as illustrated in FIG. 8 or FIG. 9) in which the controller 20 is caused to transition to the calibration mode after waiting for the actuators 5a, 6a, 7a, and 8a to stop, it is possible to reduce the time from when the operator issues an instruction to perform a calibration of each of the actuators 5a, 6a, 7a, and 8a until the calibration is completed.

While embodiments of the present invention have been described in detail above, the present invention is not limited to the embodiments described above and encompasses a variety of modifications. For example, the above-described embodiments have been described in detail to clearly describe the present invention, and the present invention is not necessarily limited to embodiments that have all the features described above. Also note that some features of one embodiment may be added to the features of another embodiment, and that some of the features of one embodiment may be eliminated or replaced with a part of another embodiment.

### Description of Reference Characters

1: Lower track structure
2: Upper swing structure (machine body)
2a: Swing frame
3: Counter weight
4: Cab
5: Boom
5a: Boom cylinder (actuator)
6: Arm
6a: Arm cylinder (actuator)
7: Bucket
7a: Bucket cylinder (actuator)
8: Swing device
8a: Swing motor (actuator)
9: Pump device
9a, 9b: Hydraulic pump
10: Control valve unit
11a to 11d: Posture sensor
15L: Left operation lever (operation device)
15R: Right operation lever (operation device)
16: Engine
20: Controller
22: Monitor
23: Hydraulic system
24: Calibration device
25: Calibration instruction device
26: Storage device
30: Operator command processing section
31: Pump solenoid valve control section
32: Directional control solenoid valve control section
33: Pump flow rate computation section
34: Semi-automatic control section
40: Pump solenoid valve command current computation section
41: Calibration-time pump solenoid valve command current computation section
42: Command current switching section
50: Directional control solenoid valve command current computation section
51: Constant section
52: Command current switching section
60: Calibration mode flag output section
61: Update-use map generation section
70: Claw tip deviation computation section
71: Constant section
72: Multiplication section
73: Boom target flow rate switching section
100: Hydraulic excavator (work machine)
101 to 104: Directional control valve
105a, 105b, 106a, 106b, 107a, 107b, 108a, 108b: Directional control solenoid valve
109a, 109b: Regulator
110: Work implement
111: Tank
200: Hydraulic control system
M1: Conversion map
M2: Update-use map

## Claims

1. A work machine comprising:
a hydraulic pump of a variable displacement type;
a regulator that controls a pump flow rate, the pump flow rate being a delivery flow rate of the hydraulic pump;
an actuator to be driven by a hydraulic fluid supplied from the hydraulic pump;
a directional control valve that controls a flow direction of the hydraulic fluid supplied from the hydraulic pump to the actuator, the directional control valve being capable of being switched between a communication position and a neutral position, the communication position enabling supply of the hydraulic fluid from the hydraulic pump to the actuator, and the neutral position disabling the supply of the hydraulic fluid from the hydraulic pump to the actuator;
an operation device for issuing an instruction as to an action of the actuator; and
a controller that controls the regulator and the directional control valve according to an operation performed on the operation device;
the controller storing a conversion map in which a target pump flow rate being a target value of the pump flow rate is associated with a command value of the regulator, and being configured to compute the target pump flow rate according to an operation amount of the operation device, convert the target pump flow rate to the command value in accordance with the conversion map, and output a command signal corresponding to the command value to the regulator;
the work machine comprising:
a calibration device that performs a calibration of the actuator; and
a calibration instruction device for instructing the calibration device to perform the calibration of the actuator, wherein
the calibration device is configured to
instruct the controller to transition to a calibration mode when instructed to perform the calibration of the actuator,
in the calibration mode, cause the command value to change in accordance with a predetermined pattern with the directional control valve being held in the neutral position, and
after instructing the controller to transition to the calibration mode, generate an update-use conversion map in which a measured value of the pump flow rate is associated with the command value, and update the conversion map by using the update-use conversion map.

2. The work machine according to claim 1, comprising:
a machine body;
a work implement that includes a work tool and is fitted to the machine body;
a plurality of actuators that drive the machine body and the work implement, the plurality of actuators including the actuator; and
a plurality of directional control valves that control a flow direction of the hydraulic fluid supplied from the hydraulic pump to the plurality of actuators, the plurality of directional control valves including the directional control valve, wherein
the controller is configured to hold the plurality of directional control valves in the neutral position in the calibration mode, regardless of the operation performed on the operation device.

3. The work machine according to claim 2, comprising:
an angle sensor that measures an angle of the machine body or the work implement, wherein
the calibration device is configured not to instruct the controller to transition to the calibration mode when a change in a measured value of the angle sensor over a unit time exceeds a predetermined threshold value, even when instructed to perform the calibration of the actuator.

4. The work machine according to claim 3, wherein
the calibration device is configured not to instruct the controller to transition to the calibration mode when there is an abnormality in the angle sensor, regardless of the measured value of the angle sensor.

5. The work machine according to claim 2, comprising:
a storage device that stores construction drawing information, wherein
the controller
has a semi-automatic control function of controlling an action of the work tool in such a manner that the work tool moves along a design surface selected from the construction drawing information as a target of a construction work by the work tool, and
is configured to disable the semi-automatic control function at a timing when the calibration device has been instructed to perform the calibration of the actuator.

6. The work machine according to claim 1, wherein
the calibration device is configured not to instruct the controller to transition to the calibration mode when there is a problem with an action of the directional control valve, even when instructed to perform the calibration of the actuator.

7. An actuator calibration system comprising:
a calibration device that performs a calibration of an actuator for a work machine including a hydraulic pump of a variable displacement type, a regulator that controls a pump flow rate, the pump flow rate being a delivery flow rate of the hydraulic pump, the actuator to be driven by a hydraulic fluid supplied from the hydraulic pump, a directional control valve that controls a flow direction of the hydraulic fluid supplied from the hydraulic pump to the actuator, the directional control valve being capable of being switched between a communication position and a neutral position, the communication position enabling supply of the hydraulic fluid from the hydraulic pump to the actuator, and the neutral position disabling the supply of the hydraulic fluid from the hydraulic pump to the actuator, an operation device for issuing an instruction as to an action of the actuator, and a controller that controls the directional control valve according to an operation performed on the operation device, the controller storing a conversion map in which a target pump flow rate being a target value of the pump flow rate is associated with a command value of the regulator, and being configured to compute the target pump flow rate according to an operation amount of the operation device, convert the target pump flow rate to the command value in accordance with the conversion map, and output a command signal corresponding to the command value to the regulator, wherein
the calibration device is configured to
instruct the controller to transition to a calibration mode,
in the calibration mode, cause the command value to change in accordance with a predetermined pattern with the directional control valve being held in the neutral position,
after instructing the controller to transition to the calibration mode, generate an update-use conversion map in which a measured value of the pump flow rate is associated with the command value, and
update the conversion map by using the update-use conversion map.
